# EUROPEAN PATENT APPLICATION

(11) **EP 1 081 618 A2**
(43) Date of publication of application: **07.03.2001**
(21) Application number: 00203041.9
(22) Date of filing: 01.09.2000
(51) Int. Cl.: G06F 17/60

(54) **Damage insurance product and system for producing a damage insurance form**

(30) Priority: 01.09.1999 NL 1012952; 26.05.2000 NL 1015318
(71) Applicant: Dynavision, 2243 CR Wassenaar (NL); Dynapart I bv, h.o.d.n. Dynavision, 2243 CR Wassenaar (NL); Dynapart II bv, h.o.d.n. Dynavision, 2243 CR Wassenaar (NL); Dynapart III bv, h.o.d.n. Dynavision, 2243 CR Wassenaar (NL)
(72) Inventor: James, Edward, 2243 CR Wassenaar (NL)
(74) Representative: Assendelft, Jacobus H.W.

(57) **Abstract**

System for making a damage insurance form, such as a damage insurance certificate, damage insurance invoice or damage insurance policy sheet, for an insured, such as a single or multiple person family, comprising data storage means; data processing means; data transfer means; data display means; wherein said data processing means are configured such that at least from the following data: own risk, no-claim, effective date insurance, income, unique identification code, bank account number, mode of payment, damage history, family situation, profession, date of birth, residential area, relating to said insured transferred from said data storage means they can calculate a damage insurance contribution-amount.

## Description

The invention concerns a novel damage insurance product, particularly for private persons. The inventors have named this product "Verzekeren per Kilo". Furthermore, the invention concerns a system for producing a damage insurance form.

With known damage insurance products, for each material risk to be insured, such as furniture, buildings, vehicle, trip, legal liability, a separate damage insurance needs be concluded. In some cases it is possible to conclude a combined damage insurance for two or more of those risks, however for each risk the contribution is determined and printed separately, either on a separate damage insurance policy sheet, or on a damage insurance policy collect sheet, on which the data of the different concluded damage insurances of the combination together are indicated. However, the risks remain insured by separate damage insurances and for each insured risk a different coding is applied.

Each damage insurance company applies its own method of own risk, wherein the company determines the own risk amount. For each product said amount is different, thus e.g. for a caravan ƒ100,-- and for furniture ƒ250,--. Apart from that some insurance companies -also again per product- have introduced a no claim arrangement, e.g. 20% contribution reduction to a maximum if no damage is claimed during a prior consecutive term.

The invention proposes a damage insurance product, wherein for all material damage risks to be insured an integral contribution is calculated on the basis of a number of characteristics that belong to the insured, among which the property and the (annual) income.

The invention offers the insured the opportunity to determine the own risk himself, correlating with its financial income and financial property. An insured with an annual income of ƒ150.000,-- selects e.g. an own risk of ƒ5.000,--, while an insured with an annual income of ƒ50.000,-- selects an own risk of e.g. ƒ500,--. The level of the annual contribution costs is, a.o., determined by the selection of a predetermined level of the own risk (a high own risk can e.g. result in a reduction of the anual contribution with 50%).

Apart from that the invention offers the opportunity of a no-claim arrangement. With that the annual contribution can be further reduced. On the other hand the contribution can increase if a damage is claimed. The combination of the no-claim arrangement and the own risk yields that damages that are no real financial risk are not claimed. The savings resulting therefrom can be advantageous for the insured by a lower contribution. For those that manage its assets as a "caring house father this is an opportunity to substantially reduce the present costs of insurance.

Furthermore the invention offers the insurance company the opportunity to design and maintain a so called service centre for its clients. The service centre is the help desk for the insured concerning damage to assets and protection of assets. The applied term "service" can be assumed here in its broadest sense. The insured can get answers to many different questions, such as:
- do you know a reliable carpenter/constructor/painter/glass repairsman?
- how can I protect my home?
- can I better bear the suffered damage myself or should I claim it?

The invention further offers the opportunity of compensation in kind. The insurance company can, possibly through an intermediate person, conclude guarantee-agreements with repair shops, which can yield a quality security. Damages claimed can, after deduction of the own risk, be directly compensated with the repair shop. The insured therefor is not obliged to pay in advance the costs for repair. The insured furthermore has the advantage that the quality of repair of the damage is at high level. Apart from that the processing costs are lower. The insurance company can benefit the insured from the lower costs by applying a lower contribution.

With the invention the contradiction of interests between the insured and the insurance company is bridged and the insured becomes "partner in business". With the invention it is substantially more easy to private persons to insure all possible material damage risks. Concluding the insurance can be more client friendly and quicker. The administration of the insured is made easier. Also at the side of the insurance company there are administrative advantages, such as less insurance certificates to be mailed. Also the calculation of the total-contribution is made easier. The processing is made more transparent. Material and costs savings are very large.

The enclosed schematic illustration shows how several characteristics of an insured are recored, on the basis of which the damage insurance contribution is determined. After payment, the insured receives the insurance certificate. If there are changes in the characteristics that serve as a basis for calculating the damage insurance contribution, the contribution is recalculated. This is e.g. done on an annual basis if the income and/or property change. Also other changes, such as in family situation, move or acceptance of another level of the own risk, profession, or damage occurance, can influence the level of the contribution.

Furthermore, to calculate the contribution use can be made of statistical data, from which information can be obtained about e.g. the relation between income and/or property and the expected material assets, such as car, caravan, house, journey behaviour, amount of furniture. Thus, on the basis of the characteristics of the insured a profile scetch is made of its damage risks, to which a matching contribution is determined. Preferably the real material assets of the insured are no longer applied. By this, the insured regains privacy.

It is appreciated that a computer system with processing and storage memory, input (keyboard, modem) and display system (monitor, printer) is indispensible for a modern damage insurance company, to process and manage all required data. It will be clear to the skilled person, how on the basis of the enclosed schematic illustration a system of software and hardware can be designed with which the damage insurance product according to the invention can be offered. Such a system is characterised by the subject matter of the enclosed claims. For ease of understanding, the communications and further details for the mutual cooperation between system components (such as between data storage means and data processing means) have not been shown. For, these are knwon as such to the skilled person. E.g. one can start with a system known as such for manufacturing e.g. an insurance certificate for an car damage insurance. While the system components remain unchanged the system can be adapted to the present invention by convenient reprogramming of the software operating means. By this the data required by the invention concerning the insured are input, stored, memorised and altered and they can be used for the contribution calculation en the desired end product is obtained in the desired, such as paper, magnetic or electronic format.

It is appreciated that with the system according to the invention the damage insurance form is obtained on the basis of a novel combination of personal characteristics, periferal characteristics and other characteristics of the insured, which yields surprising results.

According to a variant of the invention presently preferred, the damages caused to of by motor vehicles are not covered with this insurance. Therefor, the insured needs to conclude a separate insurance.

Preferably the contribution amount is calculated from one or more of the following: the family situation, the income, the property, the value of the house, the profession, the age of the insured(s).

Preferably the calculation of the contribution amount is based on the financial situation of the insured, its life situation and the level of the own risk selected by the insured.

To determine the financial situation the living situation, the income and the financial property play an important role. The living situation can be determined from the home address, e.g. the postal code. An alternative for this is e.g. the council appraisal value of the house. In this way, the living behaviour of the insured can be determined. The financial situation determines to a great extend the kind of material assets (e.g. indeed or not a second house, caravan of boat, expensive furniture, many or few valuables) that have to be insured against damages.

An important role to determine the living situation are the age of the insured, if he/she has a partner and if children living at home. The living situation greatly determines the quantity of material assets of the insured.

Thus, to aquire an insurance a person merely has to fill in on a simple form one or more of the following data: name, address, postal code, city, date of birth, family situation (indeed or not married/living together; number of children living at home), the annual income, the financial property and the desired effective date of the insurance.

meaning of the reference numbers in the enclosed diagram:
- 3: insured
- 4: personal characteristics
- 5: peripheral characteristics
- 6: other characteristics
- 7: request
- 8: mutation
- 9: contribution determination
- 10: recalculation contribution
- 11: insurance
- 12: payment
- 13: insurance certificate

### ServiceIntermediary

In an alternative the invention also relates to a novel automated system for purchasing a product, particularly a service.

At present, several automated systems are known, wherein individuals interested to acquire a determined article enter themselves mutually independently at a buying organisation through the internet, which offers the accumulated demand to a sales organisation at a reduced unit price. Settlement between individuals and buying organisation is carried out directly, wherein typically upfront payment is required. Is has come out that due to several reasons, these systems are not fully satisfying in practice.

The object of the present invention is an improved system, wherein customers mutually independent inform a intermediary which two or more products they desire from a range of more than one standard product determined by the intermediary, wherein said intermediary offers this demand in combination to market parties, the costs settled with an institution of which the customers are a member and in that connection also checks, that a spending limit is not exceeded by a respective customer.

In this way it is e.g. possible, that employees each within a fixed, individual budget, attributed by the employer, can make a choice among different products, particularly services, e.g. transport, child care, shopping service, clothes cleaning service, garden maintenance service, such that the employer is able to accept as much as possible the individual desires of the employees, wherein the employer also is protected against exceedance of the budget.

The employer (institution) can receive periodically from the intermediary qn unspecified invoice for all his employees, while the customers (employees) themselves can receive an individual scedule of the products they have received. In this way the particular spending of the customer (employee) remains secret to the institution (employer) which will be appreciated by the customer (employee). Since the system functions automatically, the reliability is high, such that the institution (employer) will not require a specified invoice. Particularly if the customer sends its choices in digital format (e.g. through internet) to the intermediary, said customer can be made completely responsible for its choices and checking thereof, yielding a substantial cost saving.

Preferably, the intermediary deals with n (i.e. more than one) institution. In that case a first group of more than one customer is member of a first institution, a second group of more than one customer member of a second institution, an n-th group of more than one customer member of an n-th institution with which the intermediary deals, wherein, if a customer belongs to more than one group, the system configured such that it is automatically registered through which institution the customer desires a specific purchase, such that the intermediary can settle with the relevant institution.

By dealing with more than one institution, the number of customers increases, such that better conditions can be arranged for them. In this way it is possible to save on the budget to be offered. Research has learned that particularly with dealing between intermediary and customers belonging to more than one institution, the communication through internet or equivalent can be of crucial importance to obtain the desired results in an efficient manner.

Furthermore it is possible that one or more of the institutions with which the intermediary deals, has another relationship with its customers then determined by employability. It is however prefered that at least one, preferably at least two institutions with which the intermediary deals, are employers. They will, due to their desire for binding their employees and the offered budget therefore, will provide support for the right to exist of the intermediary. Apart from that it is possible, that for an institution the intermediary does not apply a spending limit. However, this is preferably done in exceptional cases, such that substantially all institutions with which the intermediary deals, apply a spending limit. Applying a spending limit increases the reliability, also from the point of fraude, e.g. by an individual not belonging to the group of customers. A customer is in this way also protected against his own mistakes (e.g. an input mistake, such that mistakingly something is purchased far above the financial capacity of said customer).

It will be clear to the skilled person, how computer hardware and software have to be configured to implement the automatic system as described above. An example is as follows:

The intermediary concludes an agreement with an employer, such that the latter and its employees get access to the system through the internet. For each individual employee, or for groups of employees, the employer inputs (input means) in the system (mathematical logical unit ALU) through internet which products may be selected by the employee, and the spending limit for the total selection. These parameters are stored in the system (memory means). The employer can retrieve these parameters from the system at any time (retrieval system) for display (display unit) and possibly mutation. Subsequently, an individual employer can retrieve from the system (query means) among which products he may select, which is shown on his monitor (display unit). Through the internet het inputs his selection into the system (input means), wherein the system checks if the spending limit is not exceeded. When the limit is exceeded, the selection is not accepted by the system, and the customer receives a corresponding response of the system through the internet. In the alternative case the system accepts the selection and stores it (memory means). Subsequently the system retrieves (query means) with a predetermined frequency, e.g. weekly, the novel selections of all customers belonging to the different institutions that have access to the system in that the intermediary has therewith concluded an agreement. In that manner the system periodically makes a file for putting orders out to tender in which the selections are combined (cumulated), classified to product type (e.g. number of requests for transport, number of requests for child care, etc.).

Furthermore, the intermediary has concluded agreements with product sellers (e.g. car lease company, child care, gardener). From these product sellers the required data, such as name address residence, product type, unit price, stored in the system (memory means). These agreements can be concluded on the basis of prognosis and applicable to different consecutive orders put out to tender. It is however also possible that the agreement is each time concluded through a auction system on internet, wherein the system indicates the parameters important to a product type, such as number of units, maximum price, time limit, etc.

The system now automatically attributes the cumulated selection of a product type from the product range to the relevant product seller. The system transmits (transmitting means), preferably through internet, a scedule of the products to be delivered. This scedule contains per unit also further details about the conditions for deliverance, such as the place and time. One or more of said details can be input by the customer at the time he input his selection into the system through internet. Subsequently the system provides a payment order to the bank after a predetermined event has happened (such as a moment in time or through internet an accepting response of the product seller), such that the product seller is paid for its services according to the attribution.

For each institution the system automatically collects debiting data based on the product selection of the respective customers and the corresponding cost price. Per institution the system automatically makes an invoice relating to a predetermined (elapsed) time, based on the total cost price of the relevant customers, which invoice is automatically printed by the system and mailed to the institution. Apart from that the system automatically makes per customer a scedule of the delivered products and associated cost price. This scedule is automatically printed by the system and mailed to the individual customer. In stead of printing of an invoice or scedule, it is possible that the system allows the customer or institution to access the data through internet, such that they can process them as desired (e.g. print or store in an own data file).

Based on the scedule received by the customer, he can independently check if the deliveries are correctly carried out, and possibly take action, e.g. by complaining at the intermediary.

In stead of communicating with the system through internet, alternative computer-communication known as such are possible, preferably with an on-line connection through the private of public telephone or cable network, to which the customer is connected with an input means (key board, i.a.) and display unit (monitor, i.a.).

Thus the invention concerns a system for intermediary between a plurality of customers of one or more institutions and a plurality of sellers of different products, comprising first data storage means to store data such as relating to the customers (such as the institution to which they belong, the spending limit they have) the product choice, the product sellers, the product prices; data processing means; data input means; data output means, wherein said data processing means are configured to independently collect from data transferred by at least said data storage means a scedule of all product choices made by all customers, to group these per product type and to offer these grouped to one or more product sellers, for the product seller corresponding to the product delivery making a payment order and for the institution making an invoice corresponding to the product delivery that has been carried out for the customers of said institution. Combination of one or more individual above aspects is possible.

It is thus appreciated that the system offers the customer (employee) the possibility, preferably on-line, to get information about the financial consequences of the choices he makes among the different products, such that said customer, within a budget, can make a personally optimum selection, e.g. based on maximum spending of the budget. Therefor the system calculates each time after the customer has input his selection into the system through said input means, the costs of said selection and shows this to the customer through said display means. The system can e.g. display those costs as a ratio of the budget. As such the one customer can calculate independently that he, within his package of desires, can benefit most from a budget point of view with the combination choice of two days extra holiday, monthly a gardener for two hours and retiring at age 60. The other customer can on the other hand possibly be most satisfied with the combination choice of bring and collect service for his scholar kids, dog care service and monthly the window cleaner.

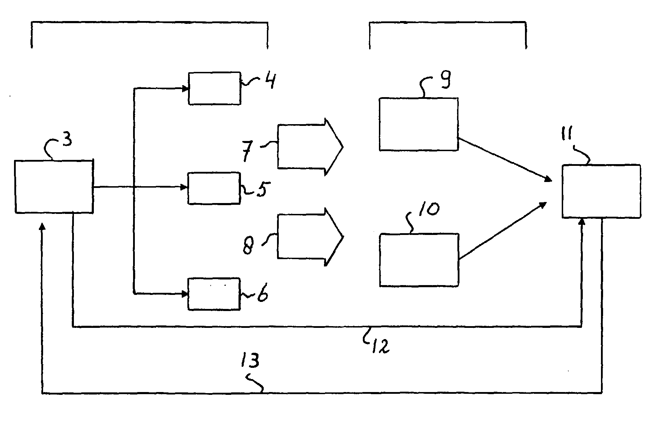

## Claims

1. System for making a damage insurance form, such as a damage insurance certificate, damage insurance invoice or damage insurance policy sheet, for an insured, such as a single or multiple person family, comprising:
data storage means for storage of data relating to said insured, among which name, address and residence data, income, property;
data processing means comprising respective calculating-hardware means and respective software operating means to control the operations of said calculating hardware means;
first data transfer means to transfer at least a part of said data relating to said insured from said data storage means to said data processing means, and possibly vice versa;
data display means to print on paper and/or show on a monitor at least the data coming from the data processing means;
second data transfer means for transferring at least data from said data processing means and/or at least data from said data storage means to said data display means;
wherein said data processing means are configured such that from at least data relating to said insured transferred from said data storage means they can
- calculate a damage insurance contribution-amount and/or
- determine if said contribution-amount is paid to generate therefrom a damage insurance certificate printing signal;
wherein said second data transferring means are configured to transfer said contribution-amount and/or said damage insurance certificate printing signal from said data processing means to said data display means; and
wherein said data display means are configured to
- print said contribution-amount on a damage insurance form and/or print said damage insurance certificate and/or
- display said contribution-amount on a monitor, possibly integrated with a display of said damage insurance form and/or display said damage insurance certificate on a monitor.

2. System according to claim 1, wherein said data relating to said insured comprise one or more of the following: own risk, no-claim, effective date insurance, unique identification code, bank account number, mode of payment, damage history, family situation, profession, date of birth.

3. System according to claim 1 or 2, wherein said data display means are configured to print on said damage insurance policy sheet at least one of said data relating to said insured, which data to be printed originate from said data storage means and/or said data processing means.

4. System according to claim 1, 2 or 3, wherein it further comprises data mutation means to change at least one of the data relating to the insured, stored in the data storage means.

5. System according to claim 1, 2, 3 or 4, wherein said contribution-amount is calculated from the family situation, the income, the property, the residential area and possibly the profession.

6. System according to claim 5, wherein at least one of the following: own risk, no-claim, effective date are applied in calculating the contribution-amount.
